# FASCICULE DE BREVET EUROPEEN

(11) **EP 2 533 095 B1**
(45) Date de publication et mention de la délivrance du brevet: **08.04.2020**
(21) Numéro de dépôt: 12004218.9
(22) Date de dépôt: 01.06.2012
(51) Int. Cl.: G02B 27/01, G02B 27/22, B64D 43/02, G01C 23/00, H04N 13/00, G06F 3/147, B64D 43/00, G09G 3/00

(54) **Système d'aide au pilotage et aéronef**
Pilotenassistenzsystem und Luftfahrzeug
Piloting assistance system and aircraft

(30) Priorité: 10.06.2011 FR 1101786
(43) Date de publication de la demande: 12.12.2012
(73) Titulaire: Airbus Helicopters, 13725 Marignane Cedex (FR)
(72) Inventeur: Ott, Adrien, 13300 Salon de Provence (FR); Germanetti, Serge, 13005 Marseille (FR); Boudier, Pierre, 13320 Bouc Bel Air (FR)
(74) Mandataire: Pouillot, Laurent Pierre Paul

(56) Documents cités:
- US-A- 4 994 794
- US-A1- 2010 123 839

## Description

La présente invention concerne un système d'aide au pilotage et un aéronef muni dudit système.

Plus particulièrement, le système d'aide au pilotage se trouve dans le domaine technique des dispositifs pour afficher des informations sur un casque, dénommé parfois « viseur ou visuel de casque ».

Il est à noter que l'on entend par « système d'aide au pilotage » un système d'aide au pilotage à court terme en tant que tel, mais aussi un système d'aide à la navigation et à la surveillance de l'aéronef.

On connaît en effet des dispositifs pour présenter à un pilote d'un aéronef une image représentant l'environnement extérieur à cet aéronef, à partir de senseurs de vision de nuit ou infrarouge ou lors de conditions climatiques dégradées par exemple. L'image est affichée sur un moyen de visualisation du casque du pilote par exemple ou encore sur un moyen de visualisation dit « tête haute ».

On rappelle en effet que lorsque le pilote regarde l'environnement extérieur au travers du pare-brise d'un aéronef, il est courant d'indiquer qu'il se trouve dans une position « tête haute ». A l'inverse, lorsque le pilote regarde l'intérieur du cockpit et notamment une planche de bord, il est courant d'indiquer que le pilote se trouve dans une position « tête basse ».

Par exemple, on connaît le dispositif connu sous la dénomination « VIGILX® ».

Ce dispositif comporte des caméras optiques infrarouges pour déterminer une image panoramique de nuit ou lors de phases de vol à visibilité réduite notamment.

De plus, il est possible d'afficher en surimpression sur l'image déterminée une représentation numérique de l'environnement à partir d'un modèle numérique de terrain.

L'image peut être affichée sur un écran « tête basse » ou encore projetée sur une visière d'un casque.

On connaît aussi un dispositif à une caméra de pilotage dont la ligne de visée est asservie à la position du casque d'un pilote. Par contre, on comprend que le dispositif est alors uniquement commandé par les mouvements de la tête d'un seul membre d'équipage.

Par ailleurs, il est courant d'effectuer un contrôle de redondance cyclique connu sous l'acronyme « CRC » pour détecter la présence d'erreurs dans un signal. On se référera à la littérature pour obtenir des informations concernant un tel contrôle.

Il est possible d'effectuer un tel contrôle par exemple pour vérifier que l'image envoyée sur un écran « tête basse » ou encore sur une visière d'un casque n'est pas erronée.

Cependant, il est à noter que les calculs à réaliser sont relativement complexes et longs à réaliser.

Par ailleurs, l'arrière plan technologique inclut notamment les documents EP 1 116 210 B1, EP 1 344 021 B1, EP 1 757 906 A2, WO 2005/124685 A1, EP 2 254 039 A1, et EP 1 762 825 A2

Le document EP 1 116 210 B1 décrit un système d'écran plat pour afficher des données relatives à des paramètres de systèmes d'aéronef comprenant un écran plat ainsi que deux processeurs interfacés chacun à un générateur graphique de couleurs.

Le document EP 1 344 021 B1 a pour objet un système d'afficheur à écran plat.

De même, le document EP 1 757 906 A2 vise un tel système muni d'un processeur de traitement général recevant des données provenant de senseurs embarqués et un processeur graphique pour la génération d'images pixélisées à partir d'une mémoire vidéo, le processeur de traitement comportant une fonction de contrôle d'intégrité pour la vérification d'au moins un pixel de l'image.

Le document WO 2005/124685 A1 présente un système pour vérifier l'exactitude d'une image générée par un processeur d'affichage, en utilisant un circuit corrélateur.

Le document EP 2 254 039 A1 décrit un module d'affichage muni de moyens de vérification d'une partie d'une image générée par un processeur.

Le document EP 1 762 825 A2 a pour objet un écran plat muni d'un moyen de vérification de l'intégrité d'une image.

Le document US 2010/0123839 présente une méthode pour notamment produire des images en trois dimensions.

Selon cette méthode, on produit une image et on détermine des informations relatives à la position de la tête d'un individu. Dès lors, un calculateur détermine des LED d'un moyen d'affichage à utiliser pour émettre une image respectivement et séquentiellement vers un œil gauche et un œil droit. Le document US 4 994 794 A vise un système binoculaire générant un effet stéréoscopique.

Les modes de réalisation sont exposés dans le jeu de revendications annexé; d'autres exemples appelés modes de réalisation ou aspect dans la description sont des exemples illustratifs et non des modes de réalisation revendiqués dans la présente demande. La présente invention a alors pour objet de proposer un système d'aide au pilotage apte à envoyer rapidement une image à une pluralité de pilotes.

Selon l'invention, un système d'aide au pilotage d'un aéronef est pourvu d'un moyen de détermination d'informations de pilotage.

Ce système d'aide au pilotage est notamment remarquable en ce qu'il comporte au moins un système d'affichage portable sur la tête d'un pilote, le système d'affichage étant muni d'un moyen d'affichage gauche apte à être en regard d'un œil gauche du pilote et d'un moyen d'affichage droit apte à être en regard d'un œil droit de ce pilote, le moyen de détermination incluant un premier moyen de traitement des informations de pilotage ainsi qu'un deuxième moyen de traitement de ces informations de pilotage comprenant des instructions mémorisées pour requérir l'affichage des informations simultanément et respectivement sur le moyen d'affichage gauche et sur le moyen d'affichage droit.

Dès lors, un moyen de détermination est mis en œuvre pour déterminer des informations de pilotage, ces informations pouvant inclure des données ou encore une image représentant l'environnement extérieur à l'aéronef par exemple.

Ces informations sont traitées non pas par un unique calculateur mais par un premier moyen de traitement et un deuxième moyen de traitement, pour être affichées respectivement non pas sur un unique moyen d'affichage mais sur un moyen d'affichage gauche visible par l'œil gauche d'un pilote et sur un moyen d'affichage droit visible par l'œil droit de ce même pilote.

En effet, le moyen d'affichage gauche et le moyen d'affichage droit sont deux moyens d'un système d'affichage portatif, agencé sur un casque ou des lunettes portés par un pilote.

Ce dispositif n'implique pas la mise en place de méthodes de traitement longues pour vérifier la cohérence des informations transmises, telle qu'un contrôle de redondance cyclique. En effet, si un moyen de traitement est défectueux, les informations affichées sur le moyen d'affichage gauche diffèrent des informations affichées sur le moyen d'affichage droit. Le pilote note alors la discordance et en déduit un dysfonctionnement.

On comprend que le contrôle de la cohérence des informations transmises est finalement réalisé rapidement par le cerveau d'un pilote.

Par ailleurs, on note que les informations peuvent être affichées sur une pluralité de système d'affichage, par exemple un système d'affichage d'un pilote et un système d'affichage d'un copilote. Dès lors, avec un même moyen de détermination d'informations, il est possible de transmettre ces informations à une pluralité de systèmes d'affichage.

L'invention peut de plus comporter une ou plusieurs des caractéristiques additionnelles qui suivent.

Par exemple, le système d'aide au pilotage peut comporter au moins un capteur de données primaires du moyen de détermination d'informations de pilotage, ce capteur de données primaires étant relié au premier moyen de traitement et au deuxième moyen de traitement. Le premier moyen de traitement et le deuxième moyen de traitement comprennent par conséquent des instructions mémorisées pour déterminer au moins une information relative à une donnée à choisir dans une liste incluant au moins :
- une vitesse de rotation d'une voilure tournante,
- l'attitude de l'appareil
- une vitesse air de l'aéronef,
- une altitude barométrique de l'aéronef,
- une hauteur de l'aéronef,
- une quantité de carburant restant dans l'aéronef,
- un facteur de charge de l'aéronef, et
- une information de première limitation d'une source motrice de l'aéronef.

Le système peut donc comprendre un ensemble de capteurs de données transmettant à chaque moyen de traitement des données de ladite liste. Ces capteurs de données peuvent être d'un type usuel. On comprend que l'on entend par « capteur de données » un équipement apte à transmettre une information utile pour le pilotage d'un aéronef.

Par suite, chaque moyen de traitement détermine des informations à afficher à l'aide des données primaires provenant des capteurs de données. Chaque moyen d'affichage remplit alors la fonction d'un générateur de symboles apte à requérir l'affichage de symboles relatifs à des données.

Selon un autre aspect, le système d'aide au pilotage peut comporter un moyen de captation d'images du moyen de détermination d'informations de pilotage.

Ce moyen de captation d'images est muni d'au moins une caméra reliée au premier moyen de traitement et/ou au deuxième moyen de traitement. Le premier moyen de traitement et le deuxième moyen de traitement comprennent des instructions mémorisées pour reconstituer une image de l'extérieur de l'aéronef en utilisant le moyen de captation.

On note que l'on entend par « image » une représentation du terrain présent à l'extérieur de l'aéronef.

De plus, on entend par « caméra » un équipement apte à transmettre une indication relative à la représentation d'un élément de l'environnement extérieur. Dès lors, le moyen de captation peut comporter par exemple au moins une caméra en tant que telle, un capteur optique infrarouge dénommé aussi « senseur optique infrarouge », voire au moins un capteur optique à bas niveau de lumière dénommé aussi « senseur optique à bas niveau de lumière ».

Le premier moyen de traitement et le deuxième moyen de traitement peuvent reconstituer une représentation de l'environnement extérieur.

Dès lors, le premier moyen de traitement et le deuxième moyen de traitement peuvent commander l'affichage d'une information incluant une image reconstituée simultanément et respectivement sur le moyen d'affichage gauche et sur le moyen d'affichage droit.

Il est à noter que l'affichage de l'image peut être réduit à certaines phases de vol.

Par exemple, en mode normal de vol à vue, le système d'affichage peut n'afficher que des informations primaires relatives aux données précédemment décrites notamment.

Par contre, en mode de vol à vue de nuit ou aux instruments, le système d'affichage peut afficher en supplément une image représentant l'environnement du terrain situé à l'extérieur de l'aéronef.

Il est donc concevable d'inhiber l'affichage de l'image en dehors des phases de vol de nuit ou aux instruments.

Selon une réalisation, le moyen de captation peut comporter au moins un capteur d'images du type utilisé dans le système « VIGILX® » relié au premier moyen de traitement et au deuxième moyen de traitement.

Selon une autre réalisation, le moyen de captation comporte une pluralité de caméras dirigées chacune vers un secteur d'une sphère entourant ledit aéronef.

Eventuellement, deux caméras adjacentes couvrent deux secteurs se recouvrant partiellement.

Ainsi, un même ensemble de caméras peut être utilisé pour afficher un environnement extérieur sur une pluralité de système d'affichage.

Par ailleurs, le système d'aide au pilotage peut comporter un moyen de positionnement dudit système d'affichage relié au premier moyen de traitement et au deuxième moyen de traitement. Le premier moyen de traitement et le deuxième moyen de traitement comprennent des instructions mémorisées pour déterminer une information incluant une image de l'extérieur de l'aéronef présente dans le champ de vision du pilote.

Par conséquent, chaque moyen de traitement exploite les indications provenant du moyen de captation d'images et du moyen de positionnement pour requérir l'affichage d'une représentation de l'environnement extérieur potentiellement visible par l'individu portant le système d'affichage. On restreint l'image déterminée au champ de vision dudit individu.

Selon un autre aspect, le moyen de positionnement pouvant repérer une position « tête basse » du système d'affichage se produisant quand un pilote regarde l'intérieur du cockpit d'un aéronef, le premier moyen de traitement et le deuxième moyen de traitement comportent des instructions mémorisées pour suspendre l'affichage de l'image dans ladite position « tête basse ».

Ainsi, l'individu portant le système d'affichage n'est pas troublé par l'affichage d'une image représentant l'environnement extérieur lorsqu'il regarde l'intérieur du cockpit.

Par ailleurs, le système d'aide au pilotage peut comporter un modèle numérique de terrain relié au premier moyen de traitement et au deuxième moyen de traitement. Le premier moyen de traitement et le deuxième moyen de traitement comportent des instructions mémorisées pour commander l'affichage d'une information incluant une représentation numérique du terrain simultanément et respectivement sur le moyen d'affichage gauche et sur le moyen d'affichage droit.

Ainsi, chaque moyen de traitement peut requérir l'affichage d'une représentation numérique du terrain en surimpression sur une image reconstituée de ce terrain provenant d'un moyen de captation d'images, pour consolider la représentation de ce terrain.

On note que les zones de la représentation numérique consolidées, à savoir les zones de cette représentation numérique correspondant à des zones de l'image, et les zones de la représentation numérique non consolidées peuvent être affichées de manière différente pour permettre rapidement à l'individu portant le système d'affichage de distinguer les informations fiables des informations provenant uniquement d'un modèle numérique de terrain.

En outre, le système d'aide au pilotage peut comporter un moyen de désactivation de l'affichage des informations sur au moins un desdits moyens d'affichage, ledit moyen de désactivation étant manœuvrable par le pilote en cas de dissemblance entre les informations affichées sur le moyen d'affichage gauche et sur le moyen d'affichage droit.

Lorsqu'un pilote portant un système d'affichage note une dissemblance entre les informations transmises à son œil gauche et les informations transmises à son œil droit, cet individu peut manœuvrer le moyen de désactivation pour éventuellement désactiver le moyen d'affichage gauche, ou le moyen d'affichage droit, ou encore le moyen d'affichage gauche et le moyen d'affichage droit voire un écran fixe de secours le cas échéant.

Le moyen de désactivation peut être un bouton rotatif par exemple.

Selon un autre aspect, le système d'aide au pilotage peut comporter au moins un écran fixe embarqué relié auxdits premier et deuxième moyens de traitement pour afficher lesdites informations.

Cet écran fixe peut notamment être utilisé en cas de dysfonctionnement du système d'affichage portable, l'écran fixe représentant dès lors un écran de secours.

En outre, un moyen de positionnement pouvant repérer une position « tête basse » du système d'affichage se produisant quand un pilote regarde l'intérieur du cockpit d'un aéronef, le premier moyen de traitement et le deuxième moyen de traitement comportent des instructions mémorisées pour afficher une représentation d'une planche de bord virtuelle.

De plus, le système peut comporter des écrans tactiles agencés sur la planche de bord de l'aéronef.

En effet, la planche de bord peut être une planche de bord virtuelle munie d'écrans tactiles réels et/ou de commandes vocales. Par exemple, les écrans tactiles intègrent des boîtiers de commande configurables automatiquement en fonction de la phase de vol pour permettre un accès aux données requises. Selon une réalisation, il est concevable d'implémenter deux écrans, un premier écran disposé a l'horizontale et un deuxième écran situé au dessus du premier écran sans néanmoins obstruer la vision à vue vers l'avant d'un pilote.

Lorsque le pilote passe à une vision « tête basse », le système d'affichage présente une représentation des écrans de pilotage, le pilote pouvant effectuer ces opérations usuelles en appuyant sur les écrans tactiles

Eventuellement, le premier moyen de traitement et le deuxième moyen de traitement des informations comprennent des instructions mémorisées pour requérir l'affichage desdites informations simultanément et respectivement sur le moyen d'affichage gauche et sur le moyen d'affichage droit selon un point de vue d'un œil gauche et un point de vue d'un œil droit pour réaliser un affichage stéréoscopique.

A partir d'un modèle numérique de terrain, chaque moyen de traitement peut calculer une image selon l'œil qui lui est associé, en prenant en compte l'orientation de la tête du pilote, et ainsi fournir une vision stéréoscopique à ce pilote. Cette solution utilise la perception naturelle du relief par la vision stéréoscopique, donc les pilotes perçoivent de façon naturelle l'environnement extérieur au-travers des différents senseurs utilisés.

Outre un système d'aide au pilotage, l'invention vise un aéronef comportant un tel système d'aide au pilotage

L'invention et ses avantages apparaîtront avec plus de détails dans le cadre de la description qui suit avec des exemples de réalisation donnés à titre illustratif en référence aux figures annexées qui représentent :
- la figure 1, un schéma d'un aéronef selon l'invention,
- la figure 2, un schéma présentant un affichage de données,
- la figure 3, un schéma présentant un affichage cohérent d'informations,
- la figure 4, un schéma présentant un affichage incohérent d'informations, et
- la figure 5 un schéma présentant deux caméras d'un moyen de captation.

Les éléments présents dans plusieurs figures distinctes sont affectés d'une seule et même référence.

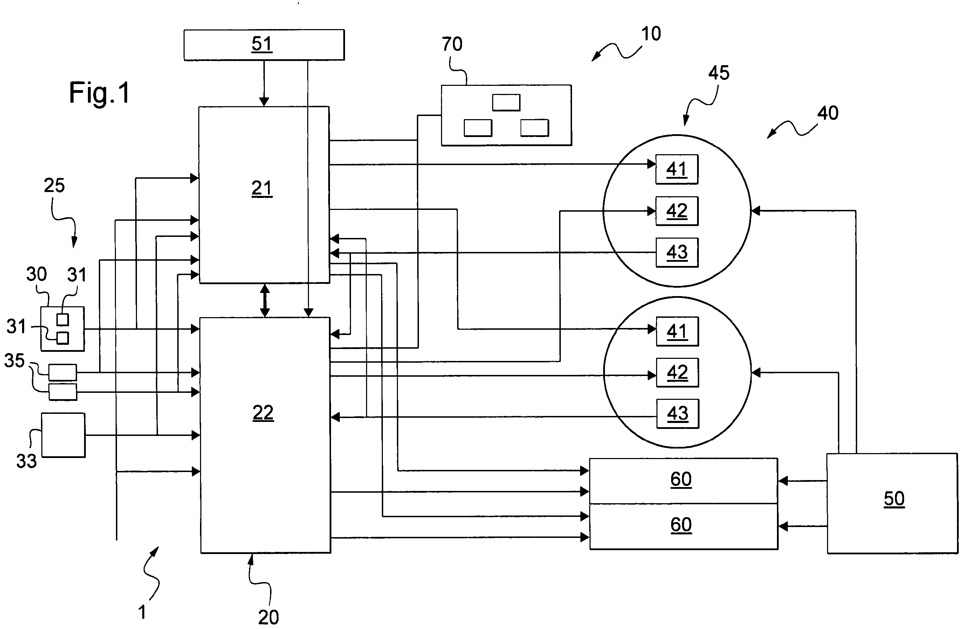

La figure 1 présente un aéronef 1 selon l'invention muni d'un système d'aide au pilotage 10. Il est à noter que les autres organes de cet aéronef ne sont pas représentés pour ne pas alourdir inutilement cette figure 1.

Le système d'aide au pilotage 10 est muni d'un ensemble d'instruments 25 communiquant avec un moyen de détermination 20. En effet, ces instruments 25 transmettent au moyen de détermination 20 des indications relatives à des informations utiles pour le pilotage de l'aéronef 1. Par exemple, les instruments 25 transmettent des signaux au moyen de détermination 20 relatifs à des données de vol ou encore à l'environnement extérieur à l'aéronef.

Le système d'aide au pilotage 10 inclut alors un dispositif d'affichage 45 comprenant au moins un système d'affichage 40 de ces informations qui peut être porté par un individu. Par exemple, le système d'aide au pilotage 10 inclut un premier système d'affichage 40 agencé sur la tête d'un pilote de l'aéronef et un deuxième système d'affichage 40 agencé sur la tête d'un copilote de l'aéronef.

Chaque système d'affichage 40 est pourvu d'un moyen d'affichage gauche 41 pour présenter les informations d'aide au pilotage à l'œil gauche d'un individu et un moyen d'affichage droit 42 pour présenter lesdites informations à l'œil droit de l'individu.

Le moyen d'affichage gauche 41 et le moyen d'affichage droit 42 peuvent être agencés sur un casque ou encore sur des verres transparents d'une paire de lunettes.

Le moyen d'affichage gauche 41 et le moyen d'affichage droit 42 peuvent être distincts en n'ayant aucune zone d'affichage en commun, bien qu'éventuellement agencés sur un même support.

Dès lors, le moyen de détermination comporte un premier moyen de traitement 21 communiquant avec les instruments 25 et un deuxième moyen de traitement 22 communiquant avec ces instruments 25. On note que le premier moyen de traitement 21 peut en outre communiquer avec le deuxième moyen de traitement 22.

Dès lors, le premier moyen de traitement 21 comprend une unité de traitement de type processeur par exemple et une mémoire contenant des instructions. L'unité de traitement du premier moyen de traitement 21 exécute les instructions mémorisées afin de traiter les indications provenant des instruments 25 pour requérir l'affichage d'informations sur le moyen d'affichage gauche 41 de chaque système d'affichage 40.

De même, le deuxième moyen de traitement 22 comprend une unité de traitement de type processeur par exemple et une mémoire contenant des instructions. L'unité de traitement du deuxième moyen de traitement 22 exécute les instructions mémorisées afin de traiter les indications provenant des instruments 25, pour requérir l'affichage d'informations sur le moyen d'affichage droit 42 de chaque système d'affichage 40.

Ces informations peuvent inclure des données d'aide au pilotage, et/ou des images représentant l'environnement extérieur à l'aéronef.

Par conséquent, les instruments 25 peuvent inclure des capteurs de données primaires 35 reliés au premier moyen de traitement 21 et au deuxième moyen de traitement 22.

On entend par « capteur de données » un dispositif apte à déterminer des données facilitant le pilotage de l'aéronef. Ainsi, le premier moyen de traitement 21 et le deuxième moyen de traitement 22 comprennent des instructions mémorisées pour déterminer au moins une information relative à une donnée à choisir dans une liste incluant au moins :
- une vitesse de rotation d'une voilure tournante,
- l'attitude de l'appareil
- une vitesse air de l'aéronef,
- une altitude barométrique de l'aéronef,
- une hauteur de l'aéronef
- une quantité de carburant restant dans ledit aéronef,
- un facteur de charge de l'aéronef, et
- une information de première limitation d'une source motrice de l'aéronef.

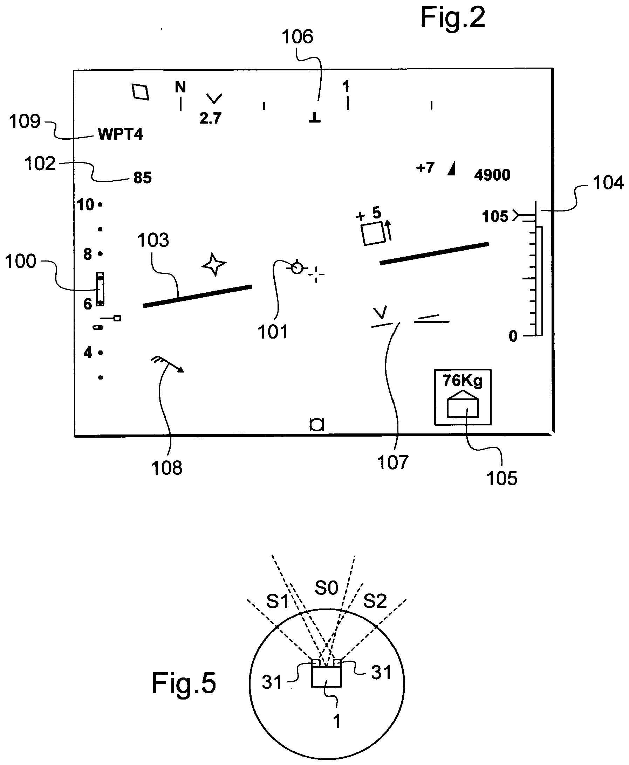

En référence à la figure 2, chaque moyen de traitement 21, 22 peut être un générateur de symboles commandant l'affichage sur le moyen d'affichage 41, 42 associé des informations suivantes à l'aide des capteurs de données primaires 35 requis :
- une information de première limitation d'une source motrice de l'aéronef 100
- un vecteur vitesse 101,
- une vitesse air 102 de l'aéronef,
- un horizon artificiel 103,
- une hauteur radiosonde 104 de l'aéronef,
- une quantité de carburant 105 restant dans ledit aéronef,
- le cap 106 suivi par l'aéronef,
- une zone de posé 107,
- une donnée de vent 108 relative à la vitesse et/ou à la direction du vent,
- une donnée de localisation 109 relative à un point de passage du plan de vol à atteindre.

Parmi les informations de type « donnée », il est concevable d'implémenter une représentation d'une planche de bord. Ainsi, lorsque l'individu regarde l'intérieur du cockpit et dans un secteur prédéterminé, le moyen de détermination peut afficher la représentation d'écrans usuels.

La planche de bord est alors une planche « virtuelle » incluant des écrans tactiles réels permettant à un pilote de requérir l'affichage de données spécifiques sur son système d'affichage.

De plus, en référence à la figure 1, les instruments 25 peuvent inclure un moyen de captation 30 d'images de l'environnement extérieur relié au premier moyen de traitement 21 et au deuxième moyen de traitement 22.

Chaque moyen de traitement 21, 22 reconstitue une représentation de cet environnement extérieur et requiert l'affichage de l'image correspondante simultanément sur les moyens d'affichage 41, 42 associés.

Le moyen de captation peut comprendre au moins une caméra 31, à savoir au moins un moyen capable de capter une représentation l'environnement extérieur.

Par exemple, en référence à la figure 5, le moyen de captation comporte une pluralité de caméras 31 dirigés chacune vers un secteur S1, S2 d'une sphère entourant l'aéronef 1.

On note qu'il est possible de procéder à un chevauchement des secteurs, deux secteurs adjacents S1, S2 se recouvrant partiellement.

A un instant donné, le pilote dirige son regard dans un champ de vision S0 couvrant partiellement deux secteurs S1, S2 adjacents sur l'exemple de la figure 5.

Dès lors, en référence à la figure 1, selon une réalisation préférée, le système d'aide au pilotage 10 inclut un moyen de positionnement 43 de chaque système d'affichage 40, chaque moyen de positionnement 43 communiquant avec le premier moyen de traitement 21 et le deuxième moyen de traitement 22.

Par suite, chaque moyen de traitement peut exécuter des instructions pour reconstituer une image de l'environnement extérieur présent uniquement dans le champ de vision S0 de l'individu portant le système d'affichage, et requérir l'affichage d'une information relative à cette image sur le moyen d'affichage associé.

Par exemple, le premier moyen de traitement 21 peut d'une part déterminer une image vue par l'œil gauche d'un pilote portant un premier système d'affichage et commander l'affichage de cette image sur le moyen d'affichage gauche associé, et, d'autre part, déterminer une image vue par l'œil gauche d'un copilote portant un deuxième système d'affichage et requérir l'affichage de cette image sur le moyen d'affichage gauche associé.

De même, le deuxième moyen de traitement 22 peut d'une part déterminer une image vue par l'œil droit d'un pilote portant un premier système d'affichage et requérir l'affichage de cette image sur le moyen d'affichage droit, et, d'autre part déterminer une image vue par l'œil droit d'un copilote portant un deuxième système d'affichage et requérir l'affichage de cette image sur le moyen d'affichage droit associé.

Par ailleurs, les instruments 25 peuvent inclure un modèle numérique de terrain 33, contenant une représentation numérique de l'environnement extérieur.

Le premier moyen de traitement 21 et le deuxième moyen de traitement 22 comportent alors des instructions mémorisées pour requérir l'affichage d'une information incluant une représentation numérique du terrain simultanément et respectivement sur le moyen d'affichage gauche 41 et sur le moyen d'affichage droit 42.

Cette représentation peut être affichée en surimpression sur une image de l'environnement extérieur reconstituée par le moyen de détermination 20 à l'aide du moyen de captation 30 ou « fusionnée » par les moyens de traitement 21 et 22.

On note que certaines informations peuvent ne pas être affichées sur les systèmes d'affichage durant certaines phases de vol.

Par exemple, il est possible d'afficher de manière continue les informations de type « données ».

Par contre, selon une réalisation, le moyen de détermination 20 requiert l'affichage d'images représentant l'environnement extérieur durant un vol sans visibilité ou durant un vol de nuit.

De plus, le moyen de positionnement 43 pouvant repérer une position « tête basse » du système d'affichage 40 se produisant quand un pilote regarde l'intérieur du cockpit d'un aéronef, le premier moyen de traitement 21 et le deuxième moyen de traitement 22 peuvent comporter des instructions mémorisées pour suspendre l'affichage d'une image représentant l'environnement extérieur dans la position « tête basse ».

On note que le système d'aide au pilotage peut aussi comprendre un moyen de commande 51 afin qu'un utilisateur puisse choisir la nature des informations affichées.

Le moyen de commande 51 peut par exemple autoriser les choix suivants :
- l'affichage d'informations de type « données » uniquement,
- l'affichage d'informations de type « images » uniquement, l'image pouvant inclure une représentation numérique de l'environnement extérieur et/ou une représentation de l'environnement réalisée à l'aide de moyens de captation 30, ou une combinaison des deux,
- l'affichage d'informations de type « données » et « images ».

Selon un autre aspect, le système d'aide au pilotage 10 peut inclure au moins un écran fixe 60 embarqué, relié au premier moyen de traitement 21 et au deuxième moyen de traitement 22.

Les informations affichées sur le système d'affichage peuvent alors aussi être affichées sur l'écran fixe 60, cet écran pouvant être du type « tête haute » ou « tête basse ».

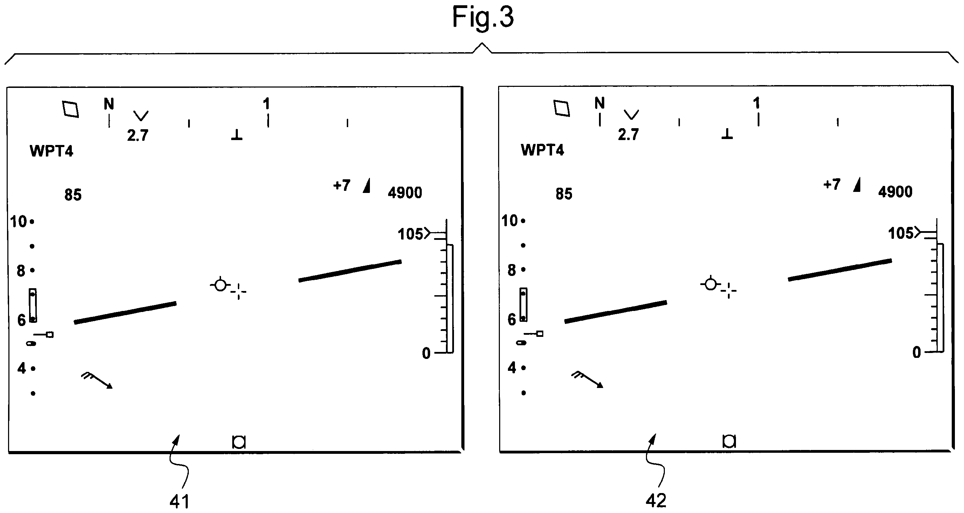

Par ailleurs, en référence à la figure 3, les informations affichées sur le moyen d'affichage gauche 41 et le moyen d'affichage droit 42 d'un moyen d'affichage 40 doivent être semblables lorsque le système fonctionne correctement.

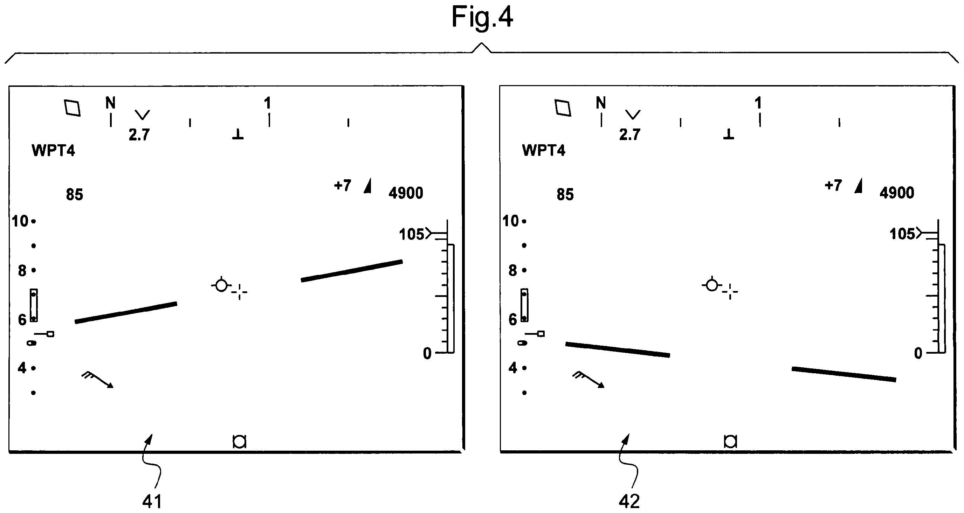

Toutefois, en référence à la figure 4, en cas d'un dysfonctionnement, des différences notables peuvent apparaître. Dès lors, ces différences sont notées par le cerveau de l'utilisateur portant le système d'affichage.

Le pilote en déduit donc un dysfonctionnement du système d'aide au pilotage.

En référence à la figure 1, le système d'aide au pilotage peut alors comprendre un moyen de commande 50 pour restreindre l'affichage d'informations aux divers moyens d'affichage gauche 41 ou encore au divers moyens d'affichage droit 42, voire aux écrans 60.

En outre, le premier moyen de traitement 21 et le deuxième moyen de traitement 22 desdites informations peuvent inclure des instructions mémorisées pour requérir l'affichage desdites informations simultanément et respectivement sur le moyen d'affichage gauche 41 et sur le moyen d'affichage droit 42 selon un point de vue d'un œil gauche et un point de vue d'un œil droit pour réaliser un affichage stéréoscopique.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Système d'aide au pilotage (10) d'un aéronef (1) pourvu d'un moyen de détermination (20) d'informations de pilotage, qui comporte au moins un système d'affichage (40) portable sur la tête d'un pilote, le système d'affichage (40) étant muni d'un moyen d'affichage gauche (41) apte être en regard d'un œil gauche dudit pilote et d'un moyen d'affichage droit (42) apte être en regard d'un œil droit dudit pilote, ledit moyen de détermination (20) incluant un premier moyen de traitement (21) ainsi qu'un deuxième moyen de traitement (22) comprenant des instructions mémorisées pour requérir l'affichage des mêmes informations simultanément et respectivement sur le moyen d'affichage gauche (41) et sur le moyen d'affichage droit (42) ; et dans lequel le premier moyen de traitement et le deuxième moyen de traitement commandent l'affichage desdites mêmes informations simultanément et respectivement sur le moyen d'affichage gauche et sur le moyen d'affichage droit; et qui comporte un moyen de désactivation (51) de l'affichage desdites informations sur au moins un desdits moyens d'affichage (41, 42), ledit moyen de désactivation (51) étant manœuvrable par le pilote en cas de dissemblance entre les informations affichées sur le moyen d'affichage gauche (41) et sur le moyen d'affichage droit (42).

2. Système selon la revendication 1,
**caractérisé en ce qu'**il comporte au moins un capteur de données primaires (35) relié au premier moyen de traitement (21) et au deuxième moyen de traitement (22), ledit premier moyen de traitement (21) et ledit deuxième moyen de traitement (22) comprenant des instructions mémorisées pour déterminer au moins une information relative à une donnée à choisir dans une liste incluant au moins :
- une vitesse de rotation d'une voilure tournante,
- l'attitude de l'appareil
- une vitesse air de l'aéronef,
- une altitude barométrique de l'aéronef,
- une hauteur de l'aéronef
- une quantité de carburant restant dans ledit aéronef,
- un facteur de charge de l'aéronef, et
- une information de première limitation d'une source motrice de l'aéronef.

3. Système selon l'une quelconque des revendications 1 à 2,
**caractérisé en ce qu'**il comporte un moyen de captation (30) d'images muni d'au moins une caméra (31) reliée au premier moyen de traitement (21) et au deuxième moyen de traitement (22), le premier moyen de traitement (21) et le deuxième moyen de traitement (22) comprenant des instructions mémorisées pour reconstituer une image de l'extérieur de l'aéronef en utilisant ledit moyen de captation (30).

4. Système selon la revendication 3,
**caractérisé en ce que** le premier moyen de traitement (21) et le deuxième moyen de traitement (22) commandent l'affichage d'une information incluant ladite image simultanément et respectivement sur le moyen d'affichage gauche (41) et sur le moyen d'affichage droit (42).

5. Système selon l'une quelconque des revendications 3 à 4,
**caractérisé en ce qu'**il comporte une pluralité de caméras (31) dirigées chacune vers un secteur d'une sphère entourant ledit aéronef.

6. Système selon la revendication 5,
**caractérisé en ce que** deux caméras (31) adjacentes couvrent deux secteurs (S1, S2) se recouvrant partiellement.

7. Système selon l'une quelconque des revendications 3 à 6,
**caractérisé en ce qu'**il comporte un moyen de positionnement (43) dudit système d'affichage (40) relié au premier moyen de traitement (21) et au deuxième moyen de traitement (22), le premier moyen de traitement (21) et le deuxième moyen de traitement (22) comprenant des instructions mémorisées pour déterminer une information incluant une image de l'extérieur de l'aéronef présente dans le champ de vision (S0) du pilote.

8. Système selon la revendication 7,
**caractérisé en ce que**, ledit moyen de positionnement (43) pouvant repérer une position « tête basse » du système d'affichage (40) se produisant quand un pilote regarde l'intérieur du cockpit d'un aéronef, le premier moyen de traitement (21) et le deuxième moyen de traitement (22) comportent des instructions mémorisées pour suspendre l'affichage de ladite image dans ladite position « tête basse ».

9. Système selon l'une quelconque des revendications 1 à 8,
**caractérisé en ce qu'**il comporte un modèle numérique de terrain (33) relié au premier moyen de traitement (21) et au deuxième moyen de traitement (22), le premier moyen de traitement (21) et le deuxième moyen de traitement (22) comportant des instructions mémorisées pour requérir l'affichage d'une information incluant une représentation numérique du terrain simultanément et respectivement sur le moyen d'affichage gauche (41) et sur le moyen d'affichage droit (42).

10. Système selon l'une quelconque des revendications 1 à 9,
**caractérisé en ce qu'**il comporte au moins un écran fixe (60) embarqué, relié auxdits premier et deuxième moyens de traitement (21, 22) pour afficher lesdites informations.

11. Système selon l'une quelconque des revendications 1 à 10,
**caractérisé en ce que**, un moyen de positionnement (43) pouvant repérer une position « tête basse » du système d'affichage (40) se produisant quand un pilote regarde l'intérieur du cockpit d'un aéronef, le premier moyen de traitement (21) et le deuxième moyen de traitement (22) comportent des instructions mémorisées pour afficher une représentation d'une planche de bord virtuelle

12. Système selon la revendication 11,
**caractérisé en ce qu'**il comporte des écrans tactiles (70) agencés sur la planche de bord de l'aéronef.

13. Système selon l'une quelconque des revendications 1 à 12,
**caractérisé en ce que**, le premier moyen de traitement (21) et le deuxième moyen de traitement (22) desdites informations comprennent des instructions mémorisées pour requérir l'affichage desdites informations simultanément et respectivement sur le moyen d'affichage gauche (41) et sur le moyen d'affichage droit (42) selon un point de vue d'un œil gauche et un point de vue d'un œil droit pour réaliser un affichage stéréoscopique.

14. Aéronef (1),
**caractérisé en ce qu'**i comporte un système d'aide au pilotage (10) selon l'une quelconque des revendications 1 à 13.

## Patentansprüche

1. System (10) zur Unterstützung beim Lenken eines Luftfahrzeugs (1) mit einem Mittel (20) zur Bestimmung von Lenkinformationen, das mindestens ein am Kopf eines Piloten tragbares Anzeigesystem (40) umfasst, wobei das Anzeigesystem (40) mit einem linken Anzeigemittel (41), das auf ein linkes Auge des Piloten ausrichtbar ist, und einem rechten Anzeigemittel (42), das auf ein rechtes Auge des Piloten ausrichtbar ist, versehen ist, wobei das Bestimmungsmittel (20) ein erstes Verarbeitungsmittel (21) und ein zweites Verarbeitungsmittel (22) umfasst, die gespeicherte Anweisungen zur Anforderung der gleichzeitigen Anzeige derselben Information auf dem linken Anzeigemittel (41) und dem rechten Anzeigemittel (42) umfassen; und wobei das erste Verarbeitungsmittel und das zweite Verarbeitungsmittel die Anzeige der gleichen Information gleichzeitig und jeweils auf dem linken Anzeigemittel und dem rechten Anzeigemittel steuern; und ein Mittel zum Sperren (51) der Anzeige der Information auf mindestens einem der Anzeigemittel (41, 42) umfasst, wobei das Sperrmittel (51) durch den Piloten im Falle einer Nichtübereinstimmung zwischen der auf dem linken Anzeigemittel (41) und dem rechten Anzeigemittel (42) angezeigten Information betätigbar ist.

2. System nach Anspruch 1,
**dadurch gekennzeichnet, dass** es mindestens einen Primärdatensensor (35) umfasst, der mit dem ersten Verarbeitungsmittel (21) und mit dem zweiten Verarbeitungsmittel (22) verbunden ist, wobei das erste Verarbeitungsmittel (21) und das zweite Verarbeitungsmittel (22) gespeicherte Anweisungen zur Bestimmung mindestens einer Information enthalten, die sich auf ein aus einer Liste zu wählendes Datenelement bezieht, die mindestens enthält:
- eine Rotationsgeschwindigkeit eines Drehflügels,
- die Stellung des Fluggeräts,
- eine Fluggeschwindigkeit des Luftfahrzeugs,
- eine barometrische Höhe des Luftfahrzeugs,
- eine Flughöhe des Luftfahrzeugs,
- eine Resttreibstoffmenge in diesem Luftfahrzeug,
- einen Lastfaktor des Luftfahrzeugs und
- eine erste Begrenzungsinformation einer Antriebsquelle des Luftfahrzeugs.

3. System nach einem der Ansprüche 1 bis 2,
**dadurch gekennzeichnet, dass** es ein Bilderfassungsmittel (30) umfasst, das mit mindestens einer Kamera (31) versehen ist, die mit dem ersten Verarbeitungsmittel (21) und dem zweiten Verarbeitungsmittel (22) verbunden ist, wobei das erste Verarbeitungsmittel (21) und das zweite Verarbeitungsmittel (22) gespeicherte Anweisungen zur Rekonstruktion eines Bildes der Umgebung des Luftfahrzeugs mit Hilfe der Erfassungsmittel (30) umfassen.

4. System nach Anspruch 3,
**dadurch gekennzeichnet, dass** das erste Verarbeitungsmittel (21) und das zweite Verarbeitungsmittel (22) die Anzeige einer Information, die dieses Bild enthält, gleichzeitig und jeweils auf dem linken Anzeigemittel (41) und auf dem rechten Anzeigemittel (42) steuern.

5. System nach einem der Ansprüche 3 bis 4,
**dadurch gekennzeichnet, dass** es eine Mehrzahl von Kameras (31) umfasst, die jeweils in einen Sektor einer das Luftfahrzeug umgebenden Kugel gerichtet sind.

6. System nach Anspruch 5,
**dadurch gekennzeichnet, dass** zwei benachbarte Kameras (31) zwei teilweise überlappende Sektoren (S1, S2) abdecken.

7. System nach einem der Ansprüche 3 bis 6,
**dadurch gekennzeichnet, dass** es ein Mittel (43) zur Positionierung des mit dem ersten Verarbeitungsmittel (21) und dem zweiten Verarbeitungsmittel (22) verbundenen Anzeigesystems (40) umfasst, wobei das erste Verarbeitungsmittel (21) und das zweite Verarbeitungsmittel (22) gespeicherte Anweisungen aufweisen zur Bestimmung einer Information, die ein im Sichtfeld (S0) des Piloten liegendes Bild der Umgebung des Luftfahrzeugs umfasst.

8. System nach Anspruch 7,
**dadurch gekennzeichnet, dass** das Positionierungsmittel (43) eingerichtet ist, eine "Kopf-gesenkt"-Position des Anzeigesystems (40) zu erkennen, die auftritt, wenn ein Pilot in das Cockpit eines Luftfahrzeugs schaut, und das erste Verarbeitungsmittel (21) und das zweite Verarbeitungsmittel (22) Anweisungen zum Unterbrechen der Anzeige des Bildes in der "Kopf-gesenkt"-Position gespeichert haben.

9. System nach einem der Ansprüche 1 bis 8,
**dadurch gekennzeichnet, dass** es ein digitales Geländemodell (33) umfasst, das mit dem ersten Verarbeitungsmittel (21) und mit dem zweiten Verarbeitungsmittel (22) verbunden ist, wobei das erste Verarbeitungsmittel (21) und das zweite Verarbeitungsmittel (22) gespeicherte Anweisungen zur Anforderung der Anzeige von Informationen einschließlich einer digitalen Darstellung des Geländes gleichzeitig und jeweils auf dem linken Anzeigemittel (41) und auf dem rechten Anzeigemittel (42) enthalten.

10. System nach einem der Ansprüche 1 bis 9,
**dadurch gekennzeichnet, dass** es mindestens einen an Bord ortsfesten Bildschirm (60) umfasst, der mit dem ersten und dem zweiten Verarbeitungsmittel (21, 22) zum Anzeigen der Informationen verbunden ist.

11. System nach einem der Ansprüche 1 bis 10,
**dadurch gekennzeichnet, dass** ein Positionierungsmittel (43) eingerichtet ist, eine "Kopf gesenkt"-Position des Anzeigesystems (40) zu lokalisieren, die auftritt, wenn ein Pilot in das Cockpit eines Flugzeugs schaut, und dass das erste Verarbeitungsmittel (21) und das zweite Verarbeitungsmittel (22) gespeicherte Anweisungen zum Anzeigen einer Darstellung eines virtuellen Armaturenbretts aufweisen.

12. System nach Anspruch 11,
**dadurch gekennzeichnet, dass** es Touchscreens (70) umfasst, die auf dem Armaturenbrett des Flugzeugs angeordnet sind.

13. System nach einem der Ansprüche 1 bis 12,
**dadurch gekennzeichnet, dass** das erste Verarbeitungsmittel (21) und das zweite Verarbeitungsmittel (22) der besagten Informationen gespeicherte Anweisungen enthalten, um die Anzeige der besagten Informationen gleichzeitig und jeweils auf dem linken Anzeigemittel (41) und auf dem rechten Anzeigemittel (42) entsprechend einem Blickpunkt eines linken Auges und einem Blickpunkt eines rechten Auges anzufordern, um eine stereoskopische Anzeige durchzuführen.

14. Luftfahrzeug (1),
**dadurch gekennzeichnet, dass** es ein System (10) zur Unterstützung beim Lenken nach einem der Ansprüche 1 bis 13 umfasst.

## Claims

1. Piloting assistance system (10) for an aircraft (1) provided with determination means (20) for determining piloting information, comprising at least one display system (40) wearable on the head of a pilot, the display system (40) being provided with left display means (41) suitable for being viewed by a left eye of said pilot and right display means (42) suitable for being viewed by a right eye of said pilot, said determination means (20) including first processor means (21) and second processor means (22) containing stored instructions for causing the same information to be displayed simultaneously and respectively on the left display means (41) and on the right display means (42); and in which the first processor means and the second processor means control the display of said same information simultaneously and respectively on the left display means and on the right display means; and which comprises deactivation means (51) for deactivating the display of the information on at least one of the display means (41, 42), said deactivation means (51) being operable by the pilot in the event of a lack of similarity between the information displayed on the left display means (41) and on the right display means (42).

2. System according to claim 1, **characterised in that** it comprises at least one primary data sensor (35) connected to the first processor means (21) and to the second processor means (22), said first processor means (21) and said second processor means (22) containing stored instructions for determining at least one item of information relating to data to be selected from a list including at least:
- a speed of rotation of a rotary wing;
- the attitude of the aircraft;
- an air speed of the aircraft;
- a barometric altitude of the aircraft;
- a height of the aircraft;
- a quantity of fuel remaining on board the aircraft;
- a load factor of said aircraft; and
- first limit information for a power plant of the aircraft.

3. System according to either claim 1 or 2, **characterised in that** it comprises image capture means (30) provided with at least one camera (31) connected to the first processor means (21) and to the second processor means (22), the first processor means (21) and the second processor means (22) containing stored instructions for reconstituting an image of the outside of the aircraft by using said capture means (30).

4. System according to claim 3, **characterised in that** the first processor means (21) and the second processor means (22) cause information including said image to be displayed simultaneously and respectively on the left display means (41) and on the right display means (42).

5. System according to either claim 3 or 4, **characterised in that** it comprises a plurality of cameras (31), each pointing towards a respective sector of a sphere surrounding said aircraft.

6. System according to claim 5, **characterised in that** two adjacent cameras (31) cover two sectors (S1, S2) that overlap partially.

7. System according to any one of claims 3 to 6, **characterised in that** it comprises positioning means (43) for determining the position of said display system (40) connected to the first processor means (21) and to the second processor means (22), the first processor means (21) and the second processor means (22) containing stored instructions for determining information including an image of the outside of the aircraft present in a field of view (S0) of the pilot.

8. System according to claim 7, **characterised in that** said positioning means (43) are capable of identifying a "head-down" position of the display system (40) as occurs when a pilot looks at the inside of a cockpit of an aircraft, the first processor means (21) and the second processor means (22) containing stored instructions for suspending the display of said image while in the "head-down" position.

9. System according to any one of claims 1 to 8, **characterised in that** it comprises a digital terrain model (33) connected to the first processor means (21) and to the second processor means (22), containing stored instructions for causing information to be displayed, that includes a digital terrain representation simultaneously and respectively on the left display means and on the right display means.

10. System according to any one of claims 1 to 9, **characterised in that** it comprises at least one on-board fixed screen (60) connected to said first and second processor means (21, 22) to display said information.

11. System according to any one of claims 1 to 10, **characterised in that** positioning means (43) are capable of identifying a "head-down" position of the display system (40) as occurs when a pilot looks at the inside of a cockpit of an aircraft, and the first processor means (21) and the second processor means (22) contain stored instructions for displaying a representation of a virtual instrument panel.

12. System according to claim 11, **characterised in that** it comprises touch screens (70) arranged on the instrument panel of the aircraft.

13. System according to any one of claims 1 to 12, **characterised in that** the first processor means (21) and the second processor means (22) for processing said information contain stored instructions for causing the information to be displayed simultaneously and respectively on the left display means (41) and on the right display means (42) from a right-eye point of view and from a left-eye point of view so as to produce a stereoscopic display.

14. Aircraft (1), **characterised in that** it comprises a piloting assistance system (10) according to any one of claim 1 to 13.
